# EUROPÄISCHE PATENTSCHRIFT

(11) **EP 2 620 686 B1**
(45) Veröffentlichungstag und Bekanntmachung des Hinweises auf die Patenterteilung: **17.09.2014**
(21) Anmeldenummer: 12152582.8
(22) Anmeldetag: 26.01.2012
(51) Int. Cl.: F16L 27/11, F16L 51/03, F16L 27/08

(54) **Verbindung von Rohrleitungsabschnitten**
Connection of pipe sections
Raccordement de sections de conduite

(43) Veröffentlichungstag der Anmeldung: 31.07.2013
(73) Patentinhaber: Siemens Aktiengesellschaft, 80333 München (DE)
(72) Erfinder: Grad, Josef, 92318 Neumarkt (DE); Ritzke, Holger, 90559 Burgthann (DE)

(56) Entgegenhaltungen:
- DE-U1-202010 006 779
- FR-A1- 2 701 753
- US-A- 3 186 742
- US-A- 4 158 462

## Beschreibung

Die Erfindung betrifft eine Verbindungsvorrichtung zur beweglichen Verbindung zweier Rohrleitungsabschnitte sowie einen Rohrleitungsabschnitt mit derartigen Verbindungsvorrichtungen.

Rohrleitungsabschnitte werden häufig beweglich miteinander verbunden, beispielsweise um Fertigungstoleranzen oder vibrations- oder temperaturbedingte Längen- und Lageänderungen von Rohrleitungsabschnitten auszugleichen

Eine deartige Verbindungsvorrichtung ist aus der FR 2701753 A1 bekannt, und offenbart den Oberbegriff von Anspruch 1.

Der Erfindung liegt die Aufgabe zugrunde, eine verbesserte Verbindungsvorrichtung zur beweglichen Verbindung zweier Rohrleitungsabschnitte anzugeben. Ferner liegt der Erfindung die Aufgabe zugrunde, einen Rohrleitungsabschnitt anzugeben, der hinsichtlich seiner Verbindbarkeit mit anderen Rohrleitungsabschnitten verbessert ist.

Die Aufgaben werden erfindungsgemäß hinsichtlich der Verbindungsvorrichtung durch die Merkmale des Anspruchs 1 und hinsichtlich des Rohrleitungsabschnitts durch die Merkmale des Anspruchs 10 gelöst.

Vorteilhafte Ausgestaltungen der Erfindung sind Gegenstand der Unteransprüche.

Eine erfindungsgemäße Verbindungsvorrichtung zur beweglichen Verbindung zweier Rohrleitungsabschnitte umfasst einen Kompensator zur flexiblen Verbindung der Rohrleitungsabschnitte und ein Stabilisierungsgelenk. Das Stabilisierungsgelenk weist ein an einem ersten der beiden Rohrleitungsabschnitte befestigbares erstes Halteblech und ein an dem zweiten der beiden Rohrleitungsabschnitte befestigbares zweites Halteblech auf. Die beiden Haltebleche sind mittels zweier Verbindungsstangen beweglich miteinander verbunden. Dazu sind die Verbindungsstangen jeweils mit einem ersten Stangenende in einem Lager des ersten Haltebleches und mit einem zweiten Stangenende in einem Lager des zweiten Haltebleches flexibel gelagert und im Wesentlichen orthogonal zu einer Verbindungsrichtung und zueinander parallel an verschiedenen Seiten des Kompensators angeordnet.

Unter einer Verbindungsrichtung zweier Rohrleitungsabschnitte wird dabei eine Richtung verstanden, entlang derer sich zwei Enden der Rohrleitungsabschnitte gegenüber stehen, wenn die beiden Rohrleitungsabschnitte an diesen Enden miteinander verbunden werden.

Das Stabilisierungsgelenk der erfindungsgemäßen Verbindungsvorrichtung ermöglicht vorteilhaft eine Stabilisierung eines zwischen zwei Rohrleitungsabschnitten angeordneten Kompensators unter Beibehaltung einer beweglichen Verbindung der Rohrleitungsabschnitte. Die Rohrleitungsabschnitte werden miteinander verbunden, indem jedes Halteblech des Stabilisierungsgelenks an jeweils einem der Rohrleitungsabschnitte befestigt wird. Die Verbindung kommt zustande, da die beiden Haltebleche über zwei Verbindungsstangen miteinander verbunden sind. Diese Verbindung ist beweglich, da die Verbindungsstangen flexibel in Lagern der Haltebleche gelagert sind, wodurch die Haltebleche und somit auch die Rohrleitungsabschnitte gegeneinander beweglich sind.

In einer bevorzugten Ausgestaltung der Erfindung weist jedes Lager eines Haltebleches für ein Stangenende einer Verbindungsstange ein Durchloch auf, durch das das Stangenende geführt ist und dessen Durchmesser größer als ein Querschnittsdurchmesser des Stangenendes ist.

Ein derartiges Lager ermöglicht vorteilhaft eine einfache flexible Kopplung einer Verbindungsstange an ein Halteblech, da das durch das Durchloch geführte Stangenende in dem Durchloch Spiel hat.

Ferner weist in dieser Ausgestaltung vorzugsweise wenigstens ein Stangenende einer Verbindungsstange ein Außengewinde auf und wird mittels eines Schraubelementes mit einem korrespondierenden Innengewinde an einem Halteblech gehalten.

Auf diese Weise kann eine Verbindungsstange in einfacher und lösbarer Weise mittels eines Schraubelementes an ein Halteblech gekoppelt werden.

In einer weiteren Ausgestaltung der Erfindung ist wenigstens ein Halteblech als ein Winkelverbinder mit zwei zueinander abgewinkelten Halteabschnitten ausgebildet, wobei ein erster Halteabschnitt zur Befestigung an einem Flansch eines Rohrleitungsabschnitts ausgebildet ist und der zweite Halteabschnitt die Lager des Haltebleches für die Stangenenden der Verbindungsstangen aufweist.

Die Ausbildung eines Haltebleches als Winkelverbinder ermöglicht vorteilhaft eine geometrisch einfache gleichzeitige Kopplung des Haltebleches an einen Flansch eines Rohrleitungsabschnitts und die Verbindungsstangen des Stabilisierungsgelenks.

Wenigstens ein Halteblech ist vorzugsweise dazu ausgebildet, mittels Schraubverbindungen oder durch Verschweißen an einem Rohrleitungsabschnitt befestigt zu werden.

Dies ermöglicht vorteilhaft eine sichere Befestigung von Halteblechen an Rohrleitungsabschnitten.

Der Kompensator weist vorzugsweise wenigstens einen Kompensatorflansch zur Befestigung an einem Rohrleitungsabschnitt und eine mit dem Kompensatorflansch verbundene flexible Verbindungskomponente zur flexiblen Kopplung der Rohrleitungsabschnitte auf.

Durch einen Kompensatorflansch kann der Kompensator vorteilhaft in einfacher und sicherer Weise mit einem Rohrleitungsabschnitt verbunden werden. Die flexible Verbindungskomponente ermöglicht eine bewegliche Verbindung zweier Rohrleitungsabschnitte.

Die flexible Verbindungskomponente ist dabei vorzugsweise ein Wellrohr oder ein Schlauch.

Dadurch werden vorteilhaft bewährte und einfach verfügbare Bauteile zur flexiblen Verbindung von Rohrleitungsabschnitten eingesetzt.

Ferner ist dabei vorzugsweise wenigstens ein Kompensatorflansch drehbar um die Verbindungsrichtung mit der flexiblen Verbindungskomponente verbunden.

Dies erleichtert während der Verbindung von Rohrleitungsabschnitten vorteilhaft die Ausrichtung des jeweiligen Kompensatorflansches zu einem mit ihm zu verbindenden Rohrleitungsabschnitt, insbesondere wenn der Rohrleitungsabschnitt einen entsprechenden Flansch aufweist, der mittels der Schraubverbindungen an dem Flansch zu befestigen ist.

Die Haltebleche und/oder die Verbindungsstangen sind vorzugsweise aus einem Metall oder einer metallischen Legierung gefertigt.

Dies ermöglicht vorteilhaft eine stabile Gestaltung der Komponenten des Stabilisierungsgelenks.

Ein erfindungsgemäßer Rohrleitungsabschnitt hat zwei Enden, an denen jeweils eine erfindungsgemäße Verbindungsvorrichtung angeordnet ist. Dabei sind jeweils eines der Haltebleche und der Kompensator jeder Verbindungsvorrichtung an dem Rohrleitungsabschnitt befestigt.

Durch die Ausstattung beider Enden des Rohrleitungsabschnitts mit jeweils einer erfindungsgemäßen Verbindungsvorrichtung können insbesondere auch Verkippungen des Rohrleitungsabschnitts aus einer Verbindungsrichtung ausgeglichen werden, ohne die Ausrichtung mit dem Rohrleitungsabschnitt verbundenen anderen Rohrleitungsabschnitten zu verändern.

Vorzugsweise weist dabei jedes Ende des Rohrleitungsabschnitts einen Flansch auf und jedes der an dem Rohrleitungsabschnitt befestigten Haltebleche ist an einem dieser Flansche befestigt.

Die Flansche und die Befestigung der Haltebleche an je einem Flansch ermöglichen vorteilhaft eine besonders einfache und sichere Befestigung der Verbindungsvorrichtungen an den Enden des Rohrleitungsabschnitts.

Die Kompensatoren weisen dabei vorzugsweise jeweils einen rohrabschnittsseitig angeordneten Kompensatorflansch auf, der an dem Flansch des jeweiligen Endes des Rohrleitungsabschnitts befestigt ist.

Dies ermöglicht vorteilhaft eine einfache und sichere Verbindung des Kompensators mit dem Rohrleitungsabschnitt.

Die Kompensatoren weisen ferner vorzugsweise jeweils an ihrer dem Rohrleitungsabschnitt abgewandten Seite einen Kompensatorflansch auf.

Dies vereinfacht vorteilhaft die Verbindung der Kompensatoren und damit auch die Verbindung des erfindungsgemäßen Rohrleitungsabschnitts mit anderen Rohrleitungsabschnitten.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels, das im Zusammenhang mit Zeichnungen näher erläutert wird.

Dabei zeigen:
- Figur 1: eine Seitenansicht einer Anordnung mit einem Rohrleitungsabschnitt, an dessen Enden jeweils eine Verbindungsvorrichtung angeordnet ist, mittels derer der Rohrleitungsabschnitt mit jeweils einem weiteren Rohrleitungsabschnitt beweglich verbunden ist,
- Figur 2: eine Draufsicht auf die in Figur 1 dargestellte Anordnung, und
- Figur 3: eine Frontansicht der in den Figuren 1 und 2 dargestellten Anordnung.

Einander entsprechende Teile sind in den Figuren mit den gleichen Bezugszeichen versehen.

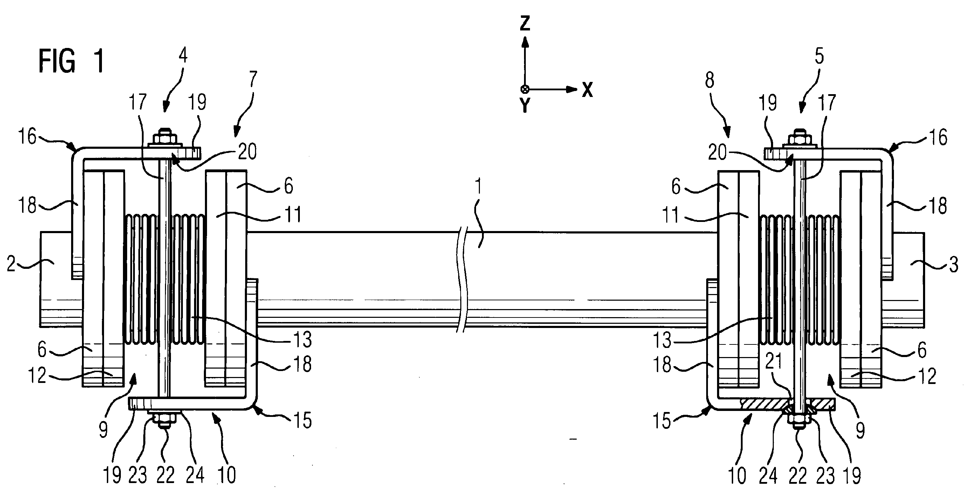

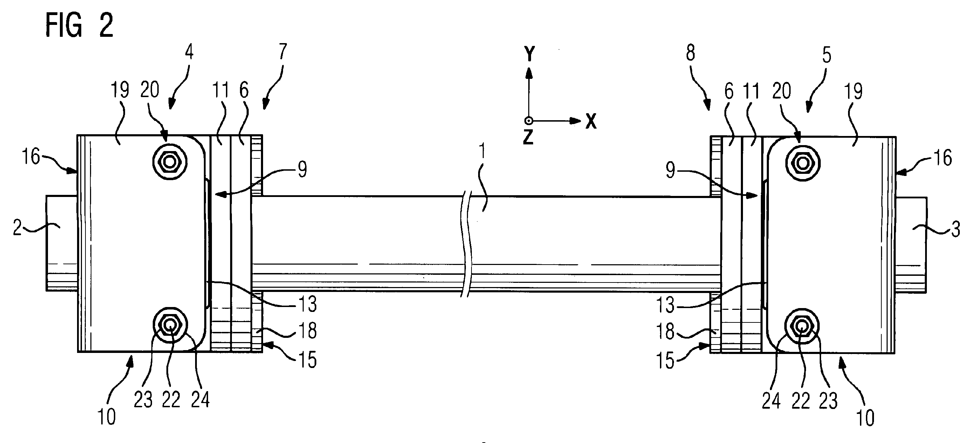

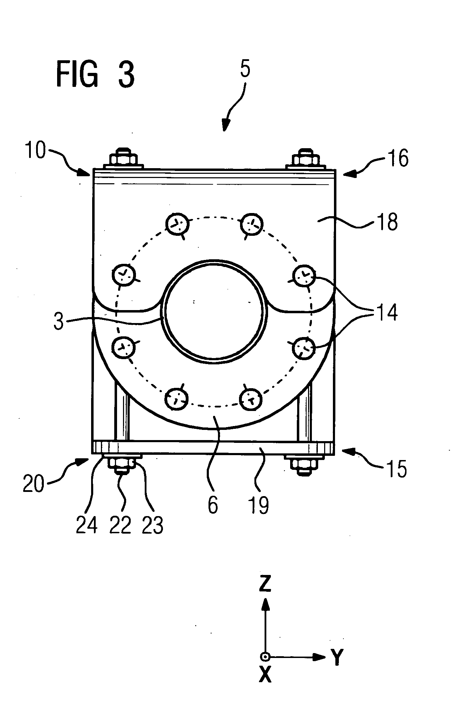

Die Figuren 1 bis 3 zeigen verschiedene Ansichten einer Anordnung dreier Rohrleitungsabschnitte 1, 2, 3, die mittels erfindungsgemäßer Verbindungsvorrichtungen 4, 5 beweglich miteinander verbunden sind. Figur 1 zeigt diese Anordnung in einer Seitenansicht, Figur 2 zeigt sie in einer Draufsicht und Figur 3 zeigt sie in einer Frontansicht.

Dabei ist ein erster Rohrleitungsabschnitt 1 zwischen einem zweiten Rohrleitungsabschnitt 2 und dem dritten Rohrleitungsabschnitt 3 angeordnet. Alle drei Rohrleitungsabschnitte 1, 2, 3 verlaufen kollinear entlang einer Richtung, die im Folgenden als X-Richtung eines kartesischen Koordinatensystems bezeichnet wird und die Verbindungsrichtung ist. Die Zeichenebene der Figur 1 ist eine XZ-Ebene dieses Koordinatensystems, die Zeichenebene der Figur 2 ist eine XY-Ebene und die Zeichenebene der Figur 3 ist eine YZ-Ebene.

Die miteinander verbundenen Enden der Rohrleitungsabschnitte 1, 2, 3 weisen jeweils einen Flansch 6 auf. Der erste Rohrleitungsabschnitt 1 ist an einem ersten Ende 7 mittels einer ersten Verbindungsvorrichtung 4 mit dem zweiten Rohrleitungsabschnitt 2 und an einem zweiten Ende 8 mittels einer zweiten Verbindungsvorrichtung 5 mit dem dritten Rohrleitungsabschnitt 3 verbunden.

Jede der Verbindungsvorrichtungen 4, 5 umfasst einen Kompensator 9 und ein Stabilisierungsgelenk 10 zur beweglichen Verbindung des ersten Rohrleitungsabschnitts 1 mit einem der anderen Rohrleitungsabschnitte 2, 3.

Jeder Kompensator 9 weist zwei Kompensatorflansche 11, 12 und eine zwischen den Kompensatorflanschen 11, 12 angeordnete flexible Verbindungskomponente 13 auf. Dabei ist ein erster Kompensatorflansch 11 mittels Schraubverbindungen 14 mit einem Flansch 6 des ersten Rohrleitungsabschnitts 1 verbunden und der zweite Kompensatorflansch 12 ist mittels Schraubverbindungen 14 mit einem Flansch 6 eines der anderen Rohrleitungsabschnitte 2, 3 verbunden.

Die flexiblen Verbindungskomponenten 13 sind in diesem Ausführungsbeispiel der Erfindung als Wellrohre ausgebildet. In einer Ausgestaltung dieses Ausführungsbeispiels ist jedes dieser Wellrohre mit wenigstens einem der Kompensatorflansche 11, 12 derart verbunden, dass der jeweilige Kompensatorflansch 11, 12 gegenüber dem Wellrohr um die X-Richtung drehbar ist. Dies erleichtert während der Verbindung der Rohrleitungsabschnitte 1, 2, 3 vorteilhaft die Ausrichtung des jeweiligen Kompensatorflansches 11, 12 zu dem entsprechenden Flansch 6 eines Rohrleitungsabschnitts 1, 2, 3, um ihn mittels der Schraubverbindungen 14 an dem Flansch 6 zu befestigen. In einem alternativen Ausführungsbeispiel der Erfindung ist wenigstens eine flexible Verbindungskomponente 13 als ein Schlauch ausgebildet.

Jedes Stabilisierungsgelenk 10 weist zwei Haltebleche 15, 16 und zwei Verbindungsstangen 17 auf, wobei jede Verbindungsstange 17 die beiden Haltebleche 15, 16 beweglich miteinander verbindet. Dabei verlaufen die Verbindungsstangen 17 in der Z-Richtung und die Verbindungsstangen 17 eines Stabilisierungsgelenks 10 sind an verschiedenen Seiten des jeweiligen Kompensators 9 angeordnet.

Jedes Halteblech 15, 16 ist als Winkelverbinder mit zwei rechtwinklig zueinander abgewinkelten planen Halteabschnitten 18, 19 ausgebildet. Dabei ist ein erster Halteabschnitt 18 jeweils an einem Flansch 6 eines Rohrleitungsabschnitts 1, 2, 3 befestigt und der zweite Halteabschnitt 19 ist beweglich mit zwei Verbindungsstangen 17 verbunden.

Dabei ist jeder erste Halteabschnitt 18 in einer YZ-Ebene angeordnet und an dem Flansch 6 eines Rohrleitungsabschnitts 1, 2, 3 an dessen von dem Kompensator 9 abgewandter Seite mittels Schraubverbindungen 14 und/oder durch Verschweißen befestigt.

Der erste Halteabschnitt 18 eines ersten Haltebleches 15 jedes Stabilisierungsgelenks 10 ist mit einem Flansch 6 des ersten Rohrleitungsabschnitts 1 verbunden. Der erste Halteabschnitt 18 des zweiten Haltebleches 16 desselben Stabilisierungsgelenks 10 ist mit einem Flansch 6 eines der anderen Rohrleitungsabschnitte 2, 3 verbunden.

Die zweiten Halteabschnitte 19 der Haltebleche 15, 16 sind jeweils in einer XZ-Ebene an verschiedenen Seiten des Kompensators 9 angeordnet, wobei der zweite Halteabschnitt 19 des ersten Haltebleches 15 unterhalb des Kompensators 9 angeordnet ist und der zweite Halteabschnitt 19 des zweiten Haltebleches 16 oberhalb des Kompensators 9 angeordnet ist.

Die zweiten Halteabschnitte 19 der Haltebleche 15, 16 weisen jeweils zwei Lager 20 für Verbindungsstangen 17 auf. In Figur 1 ist das rechts unten dargestellte Lager 20 zu seiner Verdeutlichung in einer Schnittdarstellung gezeigt.

Jedes dieser Lager 20 weist ein Durchloch 21 auf, durch das ein Stangenende 22 einer Verbindungsstange 17 geführt ist. Dabei ist der Durchmesser des Durchlochs 21 größer als der Querschnittsdurchmesser des Stangenendes 22, so dass das Stangenende 22 in dem Durchloch 21 Spiel hat. Das Stangenende 22 weist ein Außengewinde auf und wird mittels eines Schraubelementes 23 mit einem korrespondierenden Innengewinde an dem jeweiligen Halteblech 15, 16 gehalten.

Zwischen dem Schraubelement 23 und dem Halteblech 15, 16 ist ferner eine Unterlegscheibe 24 angeordnet, deren Außendurchmesser größer als der Durchmesser des Durchloches 21 ist, so dass sie nicht mit dem Schraubelement 23 zusammen durch das Durchloch 21 rutschen kann. Ferner ist die dem Halteblech 15, 16 zugewandte Seite der Unterlegscheibe 24 vorzugsweise gewölbt ausgeführt, so dass sie durch die Ränder des Durchloch 21 ähnlich wie in einer Gelenkpfanne beweglich gelagert ist.

Das Durchloch 21, das Schraubelement 23 und die Unterlegscheibe 24 bilden somit zusammen ein Lager 20 für ein Stangenende 22 einer Verbindungsstangen 17, in dem die Verbindungsstange 17 beweglich ähnlich wie mittels eines Kugelgelenks gelagert ist. Die Verbindungsstangen 17 verbinden dadurch die beiden Haltebleche 15, 16 eines Stabilisierungsgelenkes 10 beweglich miteinander, so dass die beiden Haltebleche 15, 16 gegeneinander um die Z-Achse verdrehbar, in X- und Y-Richtung verschiebbar und verkippbar sind.

Dadurch verbindet jedes Stabilisierungsgelenk 10 zwei Rohrleitungsabschnitte 1, 2, 3 beweglich miteinander, so dass auch miteinander verbundene Rohrleitungsabschnitte 1, 2, 3 gegeneinander in X-, Y- und Z-Richtung verschiebbar und verkippbar sind. Außerdem stabilisiert das Stabilisierungsgelenk 10 gleichzeitig den zwischen den betreffenden Rohrleitungsabschnitten 1, 2, 3 angeordneten Kompensator 9 der jeweiligen Verbindungsvorrichtung 4, 5. Dadurch, dass an jedem Ende 7, 8 des ersten Rohrleitungsabschnitts 1 eine Verbindungsvorrichtung 4, 5 angeordnet ist, können insbesondere auch Verkippungen des ersten Rohrleitungsabschnitts 1 aus der X-Richtung ausgeglichen werden, ohne die Ausrichtung der anderen Rohrleitungsabschnitte 2, 3 in X-Richtung zu verändern.

Obwohl die Erfindung im Detail durch ein bevorzugtes Ausführungsbeispiel näher illustriert und beschrieben wurde, so ist sie nicht durch dieses offenbarte Ausführungsbeispiel eingeschränkt und andere Variationen können vom Fachmann hieraus abgeleitet werden, ohne den Schutzumfang der Erfindung zu verlassen, gemäß den Ansprüchen 1 bis 13.

## Patentansprüche

1. Verbindungsvorrichtung (4, 5) zur beweglichen Verbindung zweier Rohrleitungsabschnitte (1, 2, 3), umfassend einen Kompensator (9) zur flexiblen Verbindung der Rohrleitungsabschnitte (1, 2, 3) und ein Stabilisierungsgelenk (10), wobei das Stabilisierungsgelenk (10) ein an einem ersten der beiden Rohrleitungsabschnitte (1, 2, 3) befestigbares erstes Halteblech (15) und ein an dem zweiten der beiden Rohrleitungsabschnitte (1, 2, 3) befestigbares zweites Halteblech (16) aufweist, **dadurch gekennzeichnet, dass** die beiden Haltebleche (15, 16) mittels zweier Verbindungsstangen (17) beweglich miteinander verbunden sind, indem die Verbindungsstangen (17) jeweils mit einem Stangenende (22) in einem Lager (20) des ersten Haltebleches (15) und mit dem anderen Stangenende (22) in einem Lager (20) des zweiten Haltebleches (16) flexibel gelagert sind und im Wesentlichen orthogonal zu einer Verbindungsrichtung und zueinander parallel an verschiedenen Seiten des Kompensators (9) angeordnet sind.

2. Verbindungsvorrichtung (4, 5) nach Anspruch 1,
**dadurch gekennzeichnet, dass** jedes Lager (20) eines Haltebleches (15, 16) für ein Stangenende (22) einer Verbindungsstange (17) ein Durchloch (21) aufweist, durch das das Stangenende (22) geführt ist und dessen Durchmesser größer als ein Querschnittsdurchmesser des Stangenendes (22) ist.

3. Verbindungsvorrichtung (4, 5) nach Anspruch 2,
**dadurch gekennzeichnet, dass** wenigstens ein Stangenende (22) einer Verbindungsstange (17) ein Außengewinde aufweist und mittels eines Schraubelementes (23) mit einem korrespondierenden Innengewinde an einem Halteblech (15, 16) gehalten wird.

4. Verbindungsvorrichtung (4, 5) nach einem der vorhergehenden Ansprüche,
**dadurch gekennzeichnet, dass** wenigstens ein Halteblech (15, 16) als ein Winkelverbinder mit zwei zueinander abgewinkelten Halteabschnitten (18, 19) ausgebildet ist, wobei ein erster Halteabschnitt (18) zur Befestigung an einem Flansch (6) eines Rohrleitungsabschnitts (1, 2, 3) ausgebildet ist und der zweite Halteabschnitt (19) die Lager (20) des Haltebleches (15, 16) für Stangenenden (22) der Verbindungsstangen (17) aufweist.

5. Verbindungsvorrichtung (4, 5) nach einem der vorhergehenden Ansprüche,
**dadurch gekennzeichnet, dass** wenigstens ein Halteblech (15, 16) dazu ausgebildet ist, mittels Schraubverbindungen (14) oder durch Verschweißen an einem Rohrleitungsabschnitt (1, 2, 3) befestigt zu werden.

6. Verbindungsvorrichtung (4, 5) nach einem der vorhergehenden Ansprüche,
**dadurch gekennzeichnet, dass** der Kompensator (9) wenigstens einen Kompensatorflansch (11, 12) zur Befestigung an einem Rohrleitungsabschnitt (1, 2, 3) und eine mit dem Kompensatorflansch (11, 12) verbundene flexible Verbindungskomponente (13) zur flexiblen Kopplung der Rohrleitungsabschnitte (1, 2, 3) aufweist.

7. Verbindungsvorrichtung (4, 5) nach Anspruch 6,
**dadurch gekennzeichnet, dass** die flexible Verbindungskomponente (13) ein Wellrohr oder ein Schlauch ist.

8. Verbindungsvorrichtung (4, 5) nach Anspruch 6 oder 7,
**dadurch gekennzeichnet, dass** wenigstens ein Kompensatorflansch (11, 12) drehbar um die Verbindungsrichtung mit der flexiblen Verbindungskomponente (13) verbunden ist.

9. Verbindungsvorrichtung (4, 5) nach einem der vorhergehenden Ansprüche,
**dadurch gekennzeichnet, dass** die Haltebleche (15, 16) und/oder die Verbindungsstangen (17) aus einem Metall oder einer metallischen Legierung gefertigt sind.

10. Rohrleitungsabschnitt (1) mit zwei Enden (7, 8), an denen jeweils eine Verbindungsvorrichtung (4, 5) nach einem der vorhergehenden Ansprüche angeordnet ist, wobei jeweils eines der Haltebleche (15, 16) und der Kompensator (9) jeder Verbindungsvorrichtung (4, 5) an dem Rohrleitungsabschnitt (1) befestigt sind.

11. Rohrleitungsabschnitt (1) nach Anspruch 10,
**dadurch gekennzeichnet, dass** jedes Ende (7, 8) des Rohrleitungsabschnitts (1) einen Flansch (6) aufweist und jedes der an dem Rohrleitungsabschnitt (1) befestigten Haltebleche (15, 16) an einem dieser Flansche (6) befestigt ist.

12. Rohrleitungsabschnitt (1) nach Anspruch 11,
**dadurch gekennzeichnet, dass** die Kompensatoren (9) jeweils einen rohrabschnittsseitig angeordneten Kompensator- flansch (11, 12) aufweisen, der an dem Flansch (6) des jeweiligen Endes (7, 8) des Rohrleitungsabschnitts (1) befestigt ist.

13. Rohrleitungsabschnitt (1) nach einem der Ansprüche 10 bis 12,
**dadurch gekennzeichnet, dass** die Kompensatoren (9) jeweils an ihrer dem Rohrleitungsabschnitt (1) abgewandten Seite einen Kompensatorflansch (11, 12) aufweisen.

## Claims

1. Connecting device (4, 5) for connecting two pipeline portions (1, 2, 3) in a movable manner, comprising a compensator (9), for connecting the pipeline portions (1, 2, 3) in a flexible manner, and a stabilizing articulation (10), wherein the stabilizing articulation (10) has a first metal retaining plate (15), which can be fastened on a first of the two pipeline portions (1, 2, 3), and a second metal retaining plate (16), which can be fastened on the second of the two pipeline portions (1, 2, 3), **characterized in that** the two metal retaining plates (15, 16) are connected to one another in a movable manner by means of two connecting rods (17), the connecting rods (17) each having one rod end (22) mounted in a flexible manner in a bearing (20) of the first metal retaining plate (15) and the other rod end (22) mounted in a flexible manner in a bearing (20) of the second metal retaining plate (16) and being arranged essentially orthogonally in relation to a connecting direction and parallel to one another on different sides of the compensator (9).

2. Connecting device (4, 5) according to Claim 1, **characterized in that** each bearing (20) of a metal retaining plate (15, 16) for a rod end (22) of a connecting rod (17) has a through-hole (21), through which the rod end (22) is guided and of which the diameter is larger than a cross-sectional diameter of the rod end (22).

3. Connecting device (4, 5) according to Claim 2, **characterized in that** at least one rod end (22) of a connecting rod (17) has an external thread and is retained on a metal retaining plate (15, 16) by means of a screw-connection element (23) with a corresponding internal thread.

4. Connecting device (4, 5) according to one of the preceding claims,
**characterized in that** at least one metal retaining plate (15, 16) is designed in the form of an angle connector with two retaining portions (18, 19) angled in relation to one another, wherein a first retaining portion (18) is designed for fastening on a flange (6) of a pipeline portion (1, 2, 3) and the second retaining portion (19) has the bearings (20) of the metal retaining plate (15, 16) for rod ends (22) of the connecting rods (17).

5. Connecting device (4, 5) according to one of the preceding claims,
**characterized in that** at least one metal retaining plate (15, 16) is designed to be fastened on a pipeline portion (1, 2, 3) by means of screw connections (14) or by welding.

6. Connecting device (4, 5) according to one of the preceding claims,
**characterized in that** the compensator (9) has at least one compensator flange (11, 12), for fastening on a pipeline portion (1, 2, 3), and a flexible connecting component (13), which is connected to the compensator flange (11, 12) and is intended for coupling the pipeline portions (1, 2, 3) in a flexible manner.

7. Connecting device (4, 5) according to Claim 6,
**characterized in that** the flexible connecting component (13) is a corrugated tube or a hose.

8. Connecting device (4, 5) according to Claim 6 or 7,
**characterized in that** at least one compensator flange (11, 12) is connected to the flexible connecting component (13) such that it can be rotated in the connecting direction.

9. Connecting device (4, 5) according to one of the preceding claims,
**characterized in that** the metal retaining plates (15, 16) and/or the connecting rods (17) are produced from a metal or a metallic alloy.

10. Pipeline portion (1) with two ends (7, 8), on which is arranged a respective connecting device (4, 5) according to one of the preceding claims, wherein in each case one of the metal retaining plates (15, 16) and the compensator (9) of each connecting device (4, 5) are fastened on the pipeline portion (1).

11. Pipeline portion (1) according to Claim 10,
**characterized in that** each end (7, 8) of the pipeline portion (1) has a flange (6) and each of the metal retaining plates (15, 16) fastened on the pipeline portion (1) is fastened on one of these flanges (6).

12. Pipeline portion (1) according to Claim 11,
**characterized in that** the compensators (9) each have a compensator flange (11, 12) which is arranged on the pipe portion and is fastened on the flange (6) of the respective end (7, 8) of the pipeline portion (1).

13. Pipeline portion (1) according to one of Claims 10 to 12,
**characterized in that** the compensators (9) each have a compensator flange (11, 12) on their side which is directed away from the pipeline portion (1).

## Revendications

1. Dispositif ( 4, 5 ) de raccordement pour le raccordement mobile de deux tronçons ( 1, 2, 3 ) de canalisation, comprenant un compensateur ( 9 ) pour le raccordement souple des tronçons ( 1, 2, 3 ) de canalisation et une articulation ( 10 ) de stabilisation, dans lequel l'articulation ( 10 ) de stabilisation a une première tôle ( 15 ) de maintien pouvant être fixée à un premier des deux tronçons ( 1, 2, 3 ) de canalisation et une seconde tôle ( 16 ) de maintien pouvant être fixée au second des deux tronçons ( 1, 2, 3 ) de canalisation, **caractérisé en ce que** les deux tôles ( 15, 16 ) de maintien sont reliées entre elles d'une manière mobile au moyen de deux barres ( 17 ) de liaison par le fait que les barres ( 17 ) de liaison sont montées de manière souple respectivement par une extrémité ( 22 ) de barre dans un palier ( 20 ) de la première tôle ( 15 ) de maintien et par l'autre extrémité ( 22 ) de barre dans un palier ( 20 ) de la seconde tôle ( 16 ) de maintien et sont disposées sensiblement orthogonalement à une direction de raccordement et parallèlement entre elles sur des côtés différents du compensateur ( 9 ).

2. Dispositif ( 4, 5 ) de raccordement suivant la revendication 1, **caractérisé en ce que** chaque palier ( 20 ) d'une tôle ( 15, 16 ) de maintien a, pour une extrémité ( 22 ) d'une tige ( 17 ) de liaison, un trou ( 21 ) traversant dans lequel passe l'extrémité ( 22 ) de la tige et dont le diamètre est plus grand qu'un diamètre de la section transversale de l'extrémité ( 22 ) de la tige.

3. Dispositif ( 4, 5 ) de raccordement suivant la revendication 2,
**caractérisé en ce qu'**au moins une extrémité ( 22 ) d'une tige ( 17 ) de liaison a un filetage et est maintenue sur la tôle ( 15, 16 ) de maintien au moyen d'un élément ( 23 ) de vissage ayant un taraudage correspondant.

4. Dispositif ( 4, 5 ) de raccordement suivant l'une des revendications précédentes,
**caractérisé en ce qu'**au moins une tôle ( 15, 16 ) de maintien est constituée sous la forme d'un raccord en équerre ayant deux parties ( 18, 19 ) de maintien coudées l'une par rapport à l'autre, une première partie ( 18 ) de maintien étant constituée pour la fixation à une bride ( 6 ) d'un tronçon ( 1, 2, 3 ) de canalisation et la deuxième partie ( 19 ) de maintien ayant les paliers ( 20 ) de la tôle ( 15, 16 ) de maintien pour les extrémités ( 22 ) des barres ( 17 ) de liaison.

5. Dispositif ( 4, 5 ) de raccordement suivant l'une des revendications précédentes,
**caractérisé en ce qu'**au moins une tôle ( 15, 16 ) de maintien est constituée pour être fixée au moyen de vissages ( 14 ) ou de soudage à un tronçon ( 1, 2, 3 ) de canalisation.

6. Dispositif ( 4, 5 ) de raccordement suivant l'une des revendications précédentes,
**caractérisé en ce que** le compensateur ( 9 ) a au moins une bride ( 11, 12 ) de compensateur pour la fixation à un tronçon ( 1, 2, 3 ) de canalisation et un composant ( 13 ) souple de raccordement relié à la bride ( 11, 12 ) de compensateur pour l'accouplement souple des tronçons ( 1, 2, 3 ) de canalisation.

7. Dispositif ( 4, 5 ) de raccordement suivant la revendication 6,
**caractérisé en ce que** le composant ( 13 ) souple de liaison est un tuyau ondulé ou un conduit souple.

8. Dispositif ( 4, 5 ) de raccordement suivant la revendication 6 ou 7,
**caractérisé en ce qu'**au moins une bride ( 11, 12 ) de compensateur est reliée au composant ( 13 ) souple de liaison de manière à pouvoir tourner autour de la direction de raccordement.

9. Dispositif ( 4, 5 ) de raccordement suivant l'une des revendications précédentes,
**caractérisé en ce que** les tôles ( 15, 16 ) de maintien et/ou les barres ( 17 ) de liaison sont en un métal ou en un alliage métallique.

10. Tronçon ( 1 ) de canalisation ayant deux extrémités ( 7, 8 ) où sont disposées respectivement un dispositif ( 4, 5 ) de raccordement suivant l'une des revendications précédentes, dans lequel respectivement l'une des tôles ( 15, 16 ) de maintien et le compensateur ( 9 ) de chaque dispositif ( 4, 5 ) de raccordement sont fixés au tronçon ( 1 ) de canalisation.

11. Tronçon ( 1 ) de canalisation suivant la revendication 10,
**caractérisé en ce que** chaque extrémité ( 7, 8 ) du tronçon ( 1 ) de canalisation a une bride ( 6 ) et chacune des tôles ( 15, 16 ) de maintien fixées au tronçon ( 1 ) de canalisation est fixée à l'une de ces brides ( 6 ).

12. Tronçon ( 1 ) de canalisation suivant la revendication 11,
**caractérisé en ce que** les compensateurs ( 9 ) ont respectivement une bride ( 11, 12 ) de compensateur, qui est disposée du côté d'une partie tubulaire et qui est fixée à la bride ( 6 ) de l'extrémité ( 7, 8 ) respective du tronçon ( 1 ) de canalisation.

13. Tronçon ( 1 ) de canalisation suivant l'une des revendications 10 à 12,
**caractérisé en ce que** les compensateurs ( 9 ) ont respectivement, sur leur côté éloigné du tronçon ( 1 ) de canalisation, une bride ( 11, 12 ) de compensateur.
